(19) Europäisches Patentamt
European Patent Office
Office européen des brevets

(11) **EP 1 104 712 A2**

(12) **EUROPEAN PATENT APPLICATION**

(43) Date of publication:
06.06.2001 Bulletin 2001/23

(51) Int Cl.⁷: **B60K 6/00**, B60K 6/04,
B60K 41/00, F16H 61/02

(21) Application number: 00124010.0

(22) Date of filing: 04.11.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: 01.12.1999 GB 9928239

(71) Applicant: Rover Group Limited
Warwick CV34 6RG (GB)

(72) Inventors:
• Burrows, Andrew Julian
Gloucestershire GL56 OAD (GB)
• Marco, James
Basingstoke, Hampshire RG23 HL5 (GB)

(74) Representative: Zollner, Richard et al
Bayerische Motoren Werke AG
Patentabteilung AJ-3
80788 München (DE)

(54) **Gear selection arrangement**

(57) A gear selection arrangement in which in a hybrid vehicle with an electric motor that motor is used as an independent drive means in order to provide a balancing torque upon an input shaft to a speed change transmission 13 in order to compensate for gearbox torque loss as a result of friction and lubrication etc. By such means, when the transmission 13 is in a neutral state the electric motor 1 can ensure that the input shaft 6 to the transmission 13 is always at a rotational speed below that of the main shaft from the transmission 13 such that irrespective of the actual gear ratio change effected by the transmission 13 the synchronisation process is that substantially of a downshift gear ratio. In such circumstances, the input shaft 6 must always accelerate to the main shaft desired rotational speed rather than vice versa.

Figure 1

**Description**

The present invention relates to a gear selection arrangement and more particularly to such an arrangement configured to provide smoother gear ratio changing as perceived by a driver of a motor vehicle.

It will be understood that the concept of gear shift feel relates to the driver perceived smoothness and displacement clarity of each individual gear shift. In particular, it will be understood that the magnitude of the forces transmitted through the gear selection arrangement during selection and engagement of a change speed transmission significantly affect the driver perceived smoothness of gear change.

It is known once synchronisation in a transmission between an input shaft to the speed change transmission and a main shaft has been achieved that it is possible for a secondary velocity differential to occur across the synchroniser element. One cause of such secondary velocity differential is the drag torque acting on the input shaft to the speed change transmission.

These secondary velocity differentials can result in a phenomenon known as partial clash. Partial clash produces an audible acoustic noise from the speed change transmission in the form a disconcerting crunch. Furthermore, relatively large forces are transmitted through the gear selector linkages which tend to displace a driver's hand from the selector gear knob as a whip action. Clearly, both the audible noise or crunch and driver hand displacement reduce driving pleasure and vehicle refinement.

It is an object of the present invention to provide a gear shift selector arrangement which can provide for smoother gear changes and therefore improve driving pleasure and vehicle refinement.

In accordance with the present invention there is provided a gear selection arrangement for a motor vehicle, the arrangement comprising a clutch arranged to selectively couple an engine drive shaft to an input shaft for a change speed transmission in order to drive a main shaft coupled to that transmission, the arrangement characterised in that the input shaft is associated with independent drive means and the arrangement includes a controller coupled to the independent drive means and to respective sensors to determine when the clutch does not couple the engine gear drive shaft to the input shaft and the rotational speed of the main shaft in order that the independent drive means can alter, when the clutch does not couple the drive shaft to the input shaft, and the speed change transmission does not couple the input shaft to the main shaft, the rotational speed of the input shaft is below a desired speed for synchronisation to couple the input shaft to the main shaft and so is always equivalent of a downshift gear change.

Typically, the independent drive means will be an electric motor. Furthermore, the independent drive means will alter the rotational speed of the input shaft in the speed change transmission neutral state which is typically in the order of 200 milliseconds.

Generally, the desired input speed will be in accordance with the following relationship:

$$XI = N. XM$$

wherein

XI = desired input speed.

N = gear ratio of the speed change transmission.

XM = main shaft speed.

Furthermore, this relationship will be stored within the controller as a memory map.

Normally, the input shaft speed will be determined by a controller through sensing the back EMF from an electric motor used as the independent drive means associated with the input shaft.

An embodiment of the present invention will now be described by way of example only and with reference to the accompanying drawings in which:-

Figure 1 is a schematic illustration of a gear selection arrangement incorporated within a parallel hybrid vehicle configuration,

Figure 2 is a graphic representation illustrating the rotational dynamics of an input transmission shaft,

Figure 3 is a graphic illustration illustrating the electrical torque assistance provided to the input transmission shaft; and

Figure 4 incorporates respective graphic illustrations showing the torque, rotational velocity and control logic signal with time during a gear change.

In order to eliminate the undesirable partial clash phenomenon of audible crunch and gear selector lever whip it is proposed in accordance with the present invention to provide means by which the torque losses within the transmission at the point of gear synchronisation are cancelled out. In such circumstances, the rotational velocity differential will be eliminated and so the possibility of partial clash is substantially diminished.

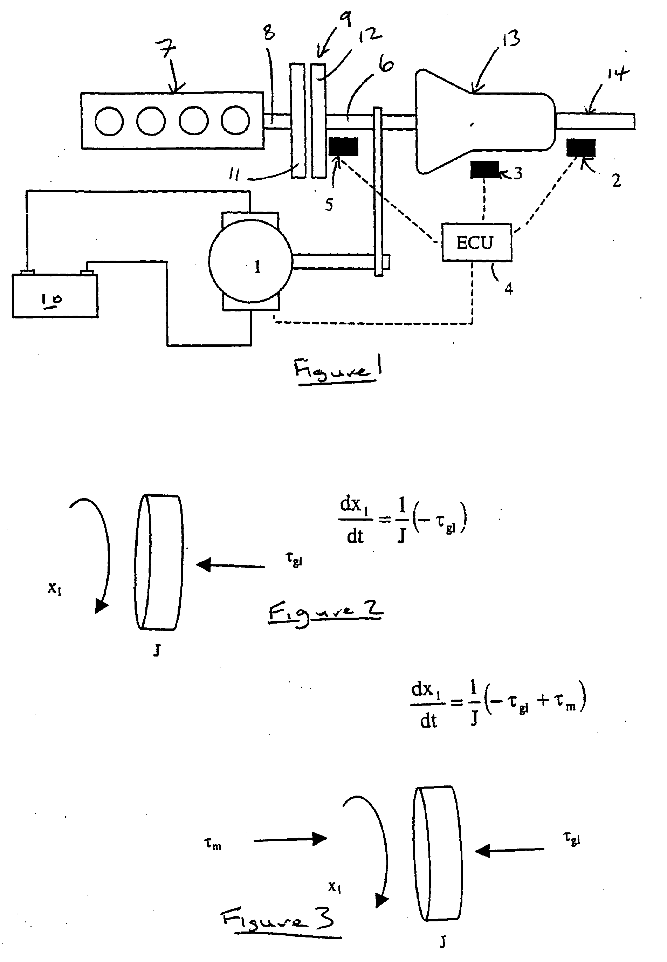

Figure 1 illustrates in schematic fashion a typical parallel hybrid vehicle configuration incorporating a gear selection arrangement in accordance with the present invention. Thus, an electric motor 1 powered by a battery 10 can provide torque to an input shaft 6 under the control of a controller 4. Similarly, an engine 7 can provide torque through an engine drive shaft 8 to a clutch assembly 9 comprising respective plates 11, 12 associated respectively with the engine drive shaft 8 and the input shaft 6. In such circumstances, it will be appreciated that torque provided to the input shaft 6 then drives a speed change transmission 13 which will typically incorporate several gear ratio combinations in order to drive a main shaft 14. It will be understood that the electric motor 1 can directly drive the input shaft 6 as specific operation is controlled by the controller 4 such that the rotational speeds of the main shaft 14 and input shaft 6 can by synchronised to allow torque coupling therebetween. It is this synchronisation which creates the partial clash with its undesirable audible noise and gear knob whip.

The present gear selection arrangement also includes in one embodiment a main shaft and velocity sensor 2 to determine the rotational speed of the main shaft 14 along with a gear ratio combination sensor 3 to determine the specific gear ratio in which the transmission 13 is operating and a clutch sensor 5 to determine when the clutch assembly 9 is in neutral such that the plates 11, 12 are not in compressive abutment or otherwise in order to couple the engine drive shaft 8 and the input shaft 6 together in order to transfer torque therebetween. Clearly, the sensors 2, 3, 5 are all coupled to the controller 4 in order that that controller 4 can determine the status of each sensor 2, 3, 5 and so appropriately control gear selection arrangement.

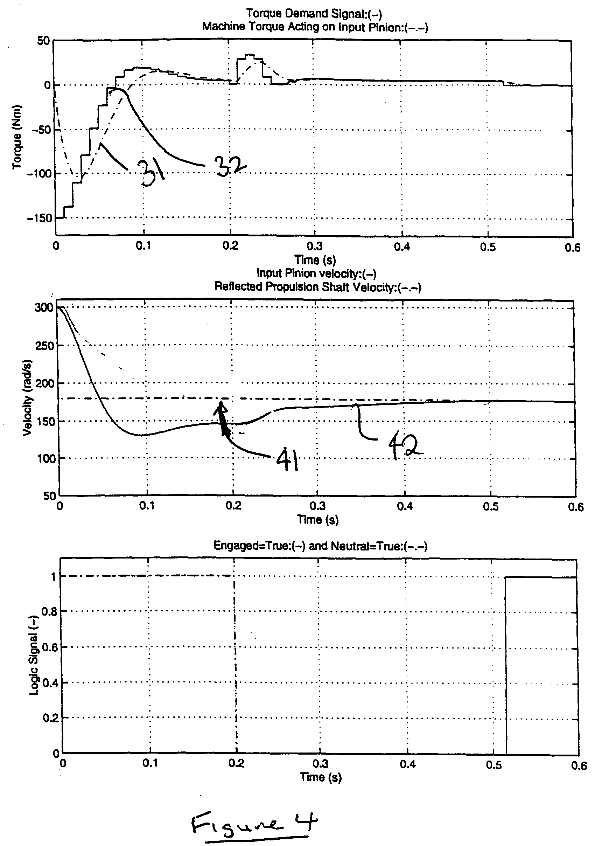

It will be understood that in selecting a gear ratio in the transmission 13 there is an inherent time period associated with a coupling passing a baulk ring and engaging the clutch gear. This time period is in the order of 30 to 50 milliseconds. During this time period the dynamics of the input transmission shaft are given by the graphic representation depicted in Figure 2 in which tgl denotes effective loss torque, j equals the inertia of the input pinion shaft and X1 is the rotational velocity of the input pinion shaft. It will be understood that the torque losses acting on the input pinion shaft are a function of the lubricant temperature and the pinion shaft rotational velocity.

Generally, it is known that the occurrence of a break in synchronisation and thus a partial clash is more pronounced during upshifts in gear ratio in comparison with downshifts in gear ratio. Thus, in accordance with the present invention, the electric motor 1 acts as an independent drive means in order to enable deceleration of the input pinion shaft to a rotational velocity below that desired speed for synchronisation.

Typically, this desired speed for synchronisation is given by the relationship XI = N.XM where XI is the desired rotational speed, N is the gear ratio of the transmission 13 and XM is the rotational speed of the main shaft. It will be understood that if the rotational speed of the input pinion shaft is altered to be below that idealised for synchronisation then irrespective of the actual gear shift being performed the speed change transmission 13 will always effectively perform a downshift-type gear change in which the input shaft 6 is increasing in speed to synchronise with the main shaft 14 rather than decelerating. As indicated previously, such downshift-type gear changes generally produce less partial clash and therefore audible noise and gear lever whip.

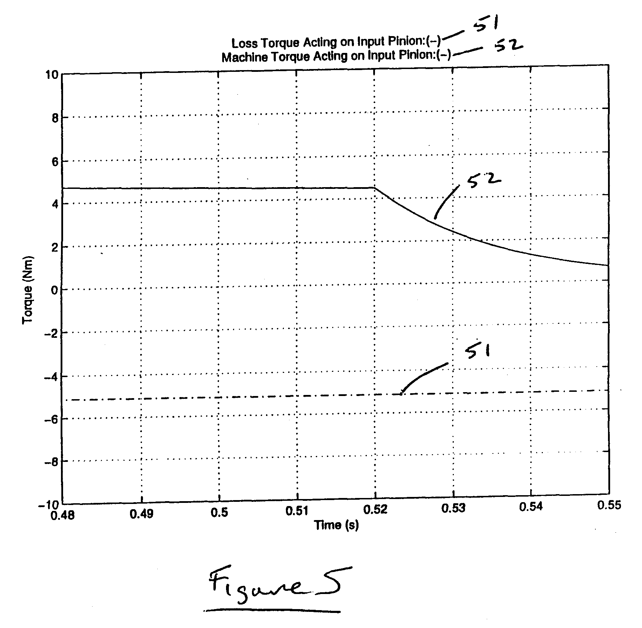

Figure 3 illustrates the electrical torque assistance provided by the electrical motor 1 to the input pinion shaft wherein previous torque has been carried over and tm denotes electrical motor torque. Thus, it will be seen that the electrical motor torque effectively opposes transmission 13 gearbox loss torque such that there is an overall reduction in the net torque acting on the input shaft 6.

The manner of operation of the electric motor 1 will be clearly understood by those skilled in the art. Effectively, the motor 1 through its couplings to the input shaft 6 will provide the torque which in effect compensates for the transmission 13 torque losses as a result of friction and drag etc. In such circumstances, the rotational speed of the input shaft 6 can be altered when the speed change transmission 13 is in neutral such that it is lower than the desired rotational speed of the main shaft 40.

As indicated with regard to the above relationship in respect of XI, it is desired that the rotational speed of the input shaft 6 is below the rotational speed of the main shaft 14 multiplied by the gear ratio of the transmission 13. In such circumstances, when a gear selection is made by the driver through the transmission 13 it will be understood that the rotational speed of the input shaft 6 is de-coupled from the engine drive shaft 8 and the main shaft 14 will always be lower than the synchronised relative rotational speeds between the input shaft 6 and the main shaft 14. In essence, the input shaft 6 will then upon selection in the transmission 13 always require acceleration as in a downshift gear change in order to become synchronised with the main shaft 14 through the transmission 13 and its selected gear ratio.

Figure 4 illustrates a typical second gear to third gear up-shift gear change in a motor vehicle as it traverses substantially level terrain. As illustrated, typically, the input pinion shaft velocity will be in the order of 300 rads per second and the gear change will be controlled electronically in accordance with the described previous relationships. Thus, during the normal time period that a transmission is in neutral i.e., the input shaft 6 is de-coupled through the speed change transmission 13 from the main shaft 14, the input pinion shaft is decelerated to a value in the present example in the order of 40 rads per second below the desired rotational velocity given by the relationship above. This reduction in the rotational speed of the main shaft is shown in Figure 4b by solid line 42.

In Figure 4a it will be noted that broken line 31 indicates the torque provided to the input shaft by the electric motor 1 in order to produce the deceleration to a value below the desired velocity as described previously. Clearly, this torque applied to the input shaft is controlled by the controller using a series of demand signals depicted as solid line 32 utilised as control signals activating reciprocal action in the electric motor to apply the desired level of torque to the input shaft sequentially.

The solid line 42 depicted in Figure 4b represents variation in the rotational velocity of the input shaft over the time period of a gear selection change. It will be noted that due to the affect of the torque applied to the input shaft by the electric motor at the end of the normal 0.2 second time period in which the speed change transmission is in neutral that the input shaft has a rotational speed below the desired rotational speed 41 for synchronisation with the main shaft. Thus, the input shaft must accelerate to that desired speed for synchronisation rather than decelerate. In such circumstances, as described previously generally, the partial clash in the transmission will be less invasive and produce lower audible noise and gear lever whip etc.

In accordance with the present invention essentially the synchronisation strategy to match the rotational speed of the shafts 6, 14 always ensures an effective down shift is produced in the input shaft 6 to main shaft 14 gear selection process. As illustrated in Figure 4, typically, the whole synchronisation and engagement process will take up to 0.6 seconds. Once full engagement of the desired gear is achieved the torque demand signal to the electric motor from the controller can return to zero as indicated and illustrated in Figure 4c.

Figure 5 is a graphic illustration depicting the respective torque factors acting upon the input pinion shaft during gear selection engagement. The time period depicted in Figure 5 is essentially the 0.48 to 0.52 second time period in which synchronisation occurs. Thus, it will be noted that the respective torques from the electric motor decelerating the input shaft and the gearbox loss torque are opposed. In such circumstances, the net torque upon the input shaft pinion is reduced to zero. Clearly, after synchronisation at 0.52 seconds, the gearbox loss torque 51 remains but the applied torque from the electric motor 52 diminishes as it is no longer required in order to alter the rotational speed of the input shaft for the purpose of ensuring an effective downshift gear selection irrespective of the actual gear selection direction.

In a conventional speed change transmission it will be understood that normally there will be a drag torque in the order of five Nm and this will result in the input pinion shaft velocity varying approximately by 70 rpm from the required synchronisation velocity during the engagement process.

It will be understood that the present gear selection arrangement may be used with regard to conventional manually operated transmission or a fully automated manual transmission or a part-automated transmission with a manual clutch and automatic gear selection arrangement. Furthermore, it will be understood that the input shaft rotational velocity can be determined by a consideration of the back emf from an electric motor used at the independent drive means for altering rotational speed of the input shaft. Thus, a specific direct measurand sensor for the input shaft velocity is not required.

Generally, in accordance with the present invention it will be appreciated that the time period during which the transmission arrangement and in particular the gearbox is in a neutral state where the input shaft 6 and the main shaft are not coupled together is utilised in order to decelerate the input shaft to a velocity just below that required to engage new gear during particularly a up-shift in gear ratios.

It will be appreciated that the present invention could also be used with so called clutchless powertrain arrangements where the engine is effectively de-coupled as a drive source by the engine management control system switching off the engine during gear changes. Thus, during these time periods of effective drive decoupling, the independent drive means can alter the input shaft speed as required to always effectively provide a downshift gear change regime. In these circumstances, the engine management control systems is an effective clutch means to selectively couple an engine drive shaft to the input shaft operationally in terms of power transfer even though there is always a mechanical coupling therebetween.

**Claims**

1. A gear selection arrangement for a motor vehicle, the arrangement comprising clutch means arranged to selectively couple drive between an engine drive shaft to an input shaft for a change speed transmission in order to drive a main shaft coupled to that transmission, the arrangement characterised in that the input shaft is associated with independent drive means and the arrangement includes a controller coupled to the independent drive means and to respective sensors to determine when the clutch means does not couple the engine drive shaft to the input shaft so that the rotational speed of the input shaft is altered by the independent drive means to be below the desired speed for synchronisation with the main shaft whereupon when the input shaft is brought into synchronisation to couple the input shaft to the main shaft it is always the equivalent of a downshift gear change.

2. An arrangement as claimed in Claim 1 wherein the independent drive means is an electric motor.

3. An arrangement as claimed in Claim 1 or Claim 2 wherein the independent drive means is arranged to alter the rotational speed of the input shaft in the time period normal for a neutral transmission status and a neutral clutch status when the engine drive shaft is not drive coupled to the input drive shaft.

4. An arrangement as claimed in any preceding claim wherein the desired speed is given by the relationship XI = (N.XM) - offset quotient wherein XI is the desired rotational speed, N is the gear ratio of the speed change transmission and XM is the main shaft rotational speed and the offset quotient is in the order of 40 rad/s.

5. An arrangement as claimed in any preceding claim wherein the controller can determine the rotational speed of the input shaft by consideration of a back emf from the independent drive means.

6. An arrangement as claimed in any preceding claim wherein the independent drive means applies a torque to the input shaft sufficient to reduce the speed of rotation to 40 rad below the desired speed of rotation for synchronisation with the main shaft.

7. A gear selection arrangement substantially as hereinbefore described with reference to the accompanying drawings.

Figure 1

$$\frac{dx_1}{dt} = \frac{1}{J}\left(-\tau_{gl}\right)$$

Figure 2

$$\frac{dx_1}{dt} = \frac{1}{J}\left(-\tau_{gl} + \tau_m\right)$$

Figure 3

Figure 4

Figure 5